Europäisches Patentamt

European Patent Office

Office européen des brevets

(11) Numéro de publication : **0 427 638 B1**

## (12) FASCICULE DE BREVET EUROPEEN

(45) Date de publication du fascicule du brevet :
**18.01.95 Bulletin 95/03**

(51) Int. Cl.$^6$ : **H04L 25/08**

(21) Numéro de dépôt : **90403186.1**

(22) Date de dépôt : **09.11.90**

(54) Interface de ligne pour un réseau de transmission d'informations.

(30) Priorité : **10.11.89 FR 8914770**

(43) Date de publication de la demande :
**15.05.91 Bulletin 91/20**

(45) Mention de la délivrance du brevet :
**18.01.95 Bulletin 95/03**

(84) Etats contractants désignés :
**DE ES GB IT**

(56) Documents cités :
**EP-A- 0 329 514**
**DE-A- 3 342 763**

(73) Titulaire : **REGIE NATIONALE DES USINES RENAULT S.A.**
**34, Quai du Point du Jour**
**F-92109 Boulogne Billancourt (FR)**

(72) Inventeur : **Lenoir, Dominique**
**32, Avenue du Général de Gaulle**
**F-92360 Meudon La Foret (FR)**
Inventeur : **Remaud, Jean-Michel**
**64, rue de Paris**
**F-92110 Clichy (FR)**

(74) Mandataire : **Srour, Elie et al**
**REGIE NATIONALE DES USINES RENAULT**
**(S. 0804)**
**8 & 10 Avenue Emile Zola**
**F-92109 Boulogne Billancourt (FR)**

## Description

La présente invention concerne une interface de ligne pour un réseau de transmission d'informations, comportant un filtre recevant en entrée les signaux du bus bifilaire du réseau et fournissant un signal filtré à un circuit de mise en forme délivrant le signal numérisé à un gestionnaire de protocole.

On connaît des réseaux numériques de transfert de données à accès aléatoire et à détection de collisions non destructives, destinés aux véhicules automobiles. Le bus de transmission des informations est du type bifilaire. Les états binaires sont représentés sur le bus par une tension différentielle entre les deux fils, le sens de la polarité codant la valeur de l'état binaire.

Chaque sous-système ou station ayant à communiquer est raccordée au bus de réseau grâce à un circuit d'interface de ligne. Cette interface de ligne a pour fonction d'assurer la liaison entre le bus du réseau constitué par deux fils et un gestionnaire de protocole associé à la station. Elle réalise, par ailleurs, la mise en forme des signaux logiques issus du gestionnaire de protocole sous une forme compatible du bus (signaux analogiques).

Le brevet FR-2.627.036 décrit une interface raccordant une station au bus bifilaire.

La présente invention a pour but de fournir une interface qui permet d'une part, le passage automatique dans un mode dégradé c'est-à-dire en communication sur un seul fil du bus, en cas de défaut sur le bus dû à un court-circuit ou à un circuit ouvert et d'autre part, le retour au mode normal (communication entre les deux fils) lorsque le défaut disparaît. Ce dispositif ne peut que localiser les défauts sur l'un des fils du bus ou sur les deux mais sans reconnaître sa nature (court circuit à la masse, au + de l'alimentation, entre les fils, circuit ouvert, cumul de plusieurs défauts).

Conformément à l'invention, l'interface comporte un filtre recevant en entrée les signaux du bus bifilaire et fournissant un signal filtre à un circuit de mise en forme comportant trois comparateurs dont le premier reçoit les signaux filtrés, dont le second reçoit le signal filtré d'un fil et une tension de référence dont le troisième reçoit le signal filtré de l'autre fil et une tension de référence et elle est caractérisée par le fait qu'elle comporte des compteurs sur lesquels sont appliqués les signaux de sorties des deuxième et troisième comparateurs, chacun de ces compteurs étant remis à zéro par le signal d'entrée de l'autre compteur de manière à détecter sur une sortie un nombre de transitions excédant un nombre prédéterminé alors que l'autre sortie n'en décompte pas et qu'elle comporte un compteur sur lequel est appliqué le signal du premier comparateur pour décompter un nombre de transitions prédéterminé dudit signal pendant une période de temps et fournir un signal de défaut si le nombre est inférieur à ce nombre prédéterminé et des circuits électroniques pour déclencher un changement d'état du signal de mode destiné au gestionnaire de protocole, si un signal de défaut est détecté.

Selon une caractéristique, l'interface comporte un filtre numérique en sortie de chacun des second et troisième comparateurs, ce filtre numérique fournissant un signal filtré au second ou troisième compteur.

Selon une autre caractéristique, les signaux des compteurs associés aux premier et second comparateurs sont envoyés à des bascules de mémorisation.

Selon une autre caractéristique, les signaux de sortie des bascules de mémorisation sont envoyées à un circuit de reconnaissance de défaut comportant des circuits "NOR".

Selon une autre caractéristique, chaque filtre numérique est constitué de bascules, d'une porte ET et d'une porte NOR commandant les entrées de la dernière bascule.

Selon une autre caractéristique, le compteur associé au premier comparateur comporte une bascule mémorisant le passage d'un nombre prédéterminé de transisition du signal sortant du comparateur, la réinitialisation étant faite périodiquement par un signal venant d'un circuit d'horloge.

L'invention va maintenant être décrite avec plus de détails en se référant à un mode de réalisation donné à titre d'exemple et représenté par les dessins annexés sur lesquels :

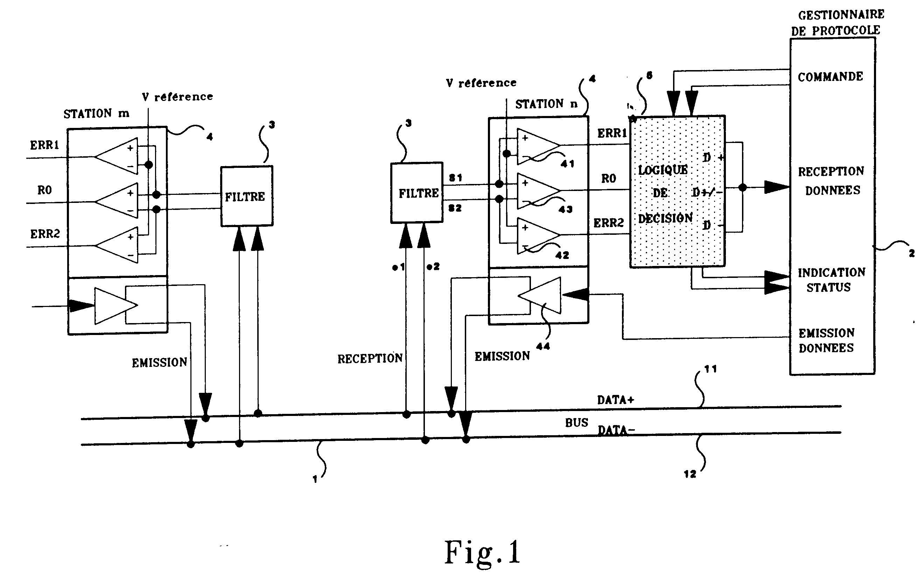

- La figure 1 est un synoptique de l'interface de ligne selon l'invention.

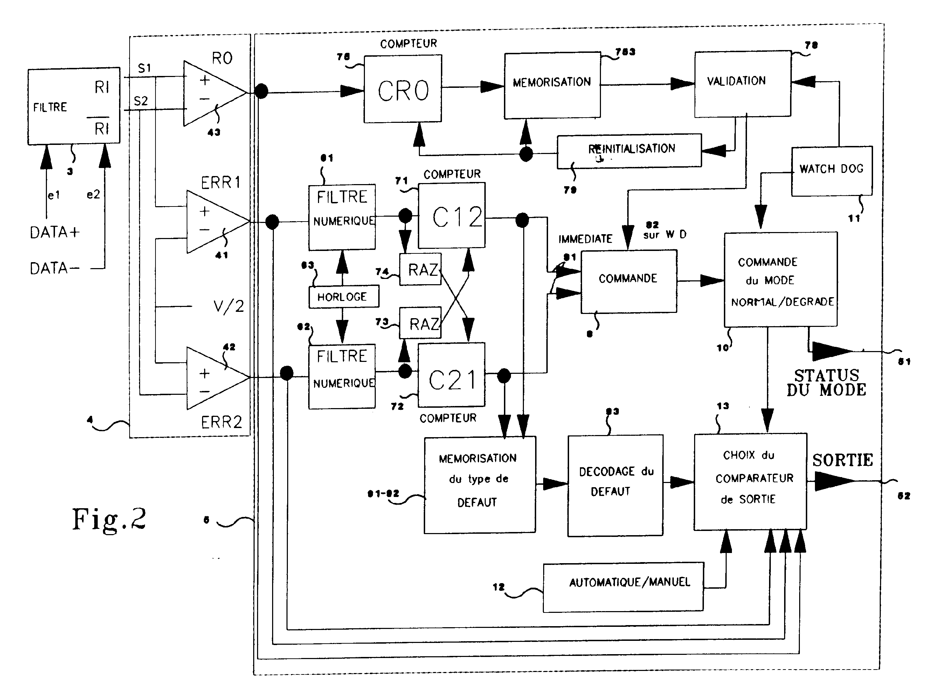

- La figure 2 est un schéma fonctionnel de l'interface.
- La figure 3 est un schéma d'un compteur de l'interface.
- La figure 4 est un schéma d'un autre compteur de l'interface.
- La figure 5 est un schéma d'un circuit de remise à zéro de l'interface.
- La figure 6 est un schéma d'un filtre numérique de l'interface.
- La figure 7 est un schéma de montage de l'interface sur un macro-composant.
- La figure 8 est un chronogramme illustrant le fonctionnement.

L'interface de ligne représentée sur les dessins a pour fonction d'assurer la liaison électrique entre le bus 1 du réseau et le gestionnaire de protocole 2 associé à une station de communication.

Le bus 1 est du type bifilaire et comporte deux fils 11 et 12 (DATA+, DATA-). Les états binaires sont matérialisés sur le bus par une tension différentielle entre les deux fils, le sens de polarité codant la valeur de

2

l'état binaire.

L'interface comporte un filtre analogique 3 dont deux entrées $e_1$ et $e_2$ sont reliés aux fils du bus et dont les deux sorties $s_1$ et $s_2$ sont reliées à un circuit de mise en forme 4 (oblique). En émission le circuit 4 transforme les signaux logiques issus du gestionnaire de protocole en signaux analogiques convenant au bus. En réception, le circuit 4 réalise l'opération inverse.

Les sorties $s_1$ et $s_2$ du filtre 3 sont raccordées à un premier comparateur 43 dont la sortie Ro est raccordée à un circuit de décision 5.

La sortie $s_1$ du filtre 3 est raccordée à un second comparateur 41 dont l'autre entrée est reliée à une tension de référence. La sortie ERR1 de ce comparateur 41, est raccordée au circuit de décision 5.

La sortie $s_2$ du filtre est raccordée à un troisième comparateur 42 dont l'autre entrée est reliée à la tension de référence. La sortie ERR2 de ce comparateur 42 est raccordée au circuit de décision 5.

Le circuit 44 reçoit les signaux du gestionnaire de protocole 2 et les envoie directement, après mise en forme, aux fils du bus.

Le circuit de décision 5 analyse en permanence l'état de sortie des trois comparateurs pour en déduire l'état de fonctionnement (mode normal ou mode dégradé) et l'indiquer au gestionnaire de réseau 2.

Les signaux sortant des comparateurs 41 et 42 sont traités par des filtres numériques 61 et 62 respectivement.

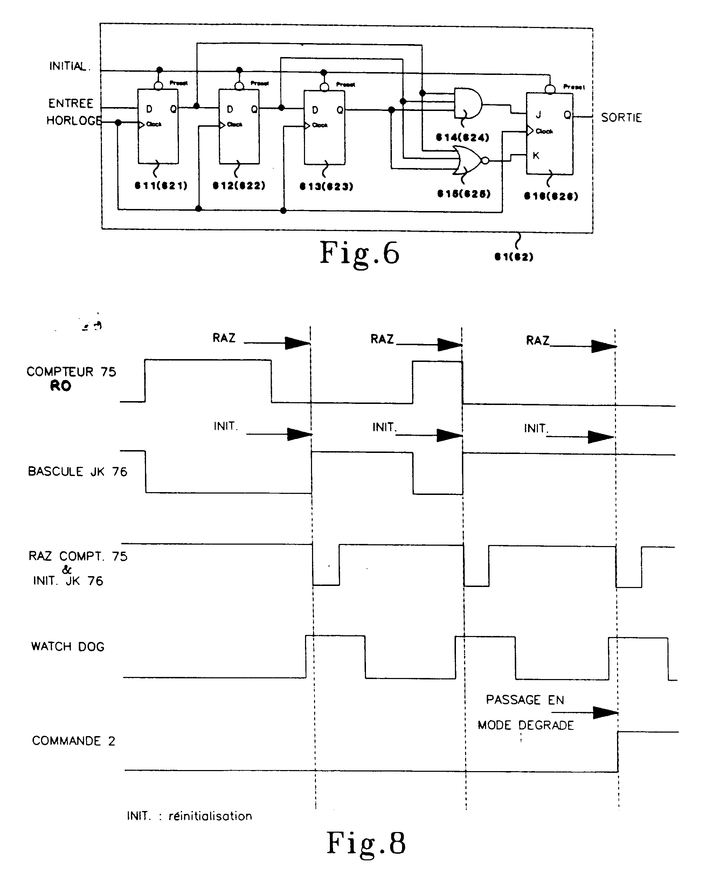

Ces filtres 61 et 62 sont identiques et sont représentés sur la figure 6. Ils sont constitués de 3 bascules D 611 à 613 (ou 612 à 623) montées en registre à décalage et d'une bascule JK 616 (ou 626). Les entrées de cette bascule reçoivent les signaux de deux portes ET et NOR décodant chacun les signaux de sortie des bascules 611 à 613. Le signal d'une horloge 6 3 est appliqué aux entrées horloges des bascules.

Le principe de ces filtres est basé sur l'échantillonnage du signal issu du comparateur 43 ou 42. Le signal est injecté sur la première bascule 611 dont le signal de sortie est envoyé à la bascule suivante. les trois derniers échantillons à la sortie des trois bascules 611 à 613 sont décodés par la porte "ET" 614 et une porte "NOR" 615 qui commandent respectivement les entrées J et K de la dernière bascule 616. Une commutation sur la sortie du comparateur n'est prise en compte que si elle est constatée sur trois échantillons successifs. Cette commutation se traduit par un changement d'état sur la sortie de la bascule 616.

La fréquence d'échantillonnage est réglée de telle sorte qu'il y ait au moins trois échantillons par bit en tenant compte des dérives d'horloge. L'initialisation de l'échantillonneur se fait afin d'obtenir en sortie un niveau logique correspondant à un état récessif (absence de communication sur le bus).

En raison des vibrations sur les véhicules, il est fort probable que les défauts se présentent sous forme de faux contacts, ce qui se traduira par des apparitions ou disparitions brèves du défaut. Malgré le filtrage analogique sur le bus, ces phénomènes fugitifs engendrent des impulsions parasites sur la sortie des comparateurs.

Si plusieurs impulsions parasites se produisent pendant la durée d'un bit, le diagnostic sur le fil en défaut peut être inversé. Les filtres numériques 61 et 62 évitent ces erreurs.

Les signaux à la sortie des filtres 61 et 62 sont envoyés à des compteurs 71 et 72 respectivement.

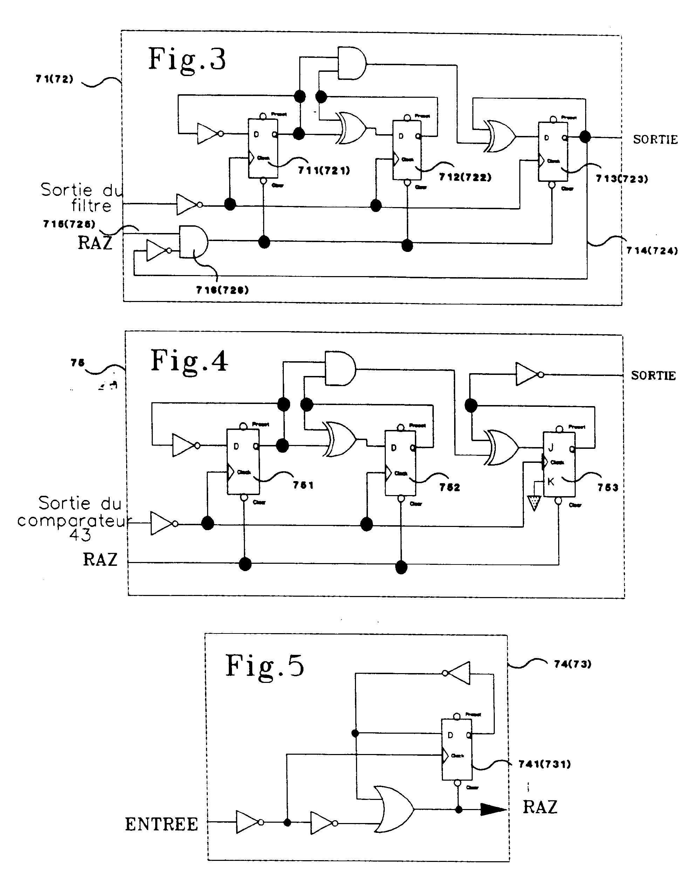

Ces compteurs identiques sont représentés à la figure 3. Chaque compteur 71 ou 72 est constitué de trois bascules D 711, 712, 713 recevant sur l'entrée "Horloge" le signal de sortie du filtre 61 ou 62.

Le compteur 71 est remis à zéro sur son entrée 715 par un circuit de remise à zéro 73 activé par le signal d'entrée arrivant sur l'autre compteur 72. De même le compteur 72 est remis à zéro sur son entrée 725 par un circuit de remise à zéro 74 activé par le signal d'entrée arrivant sur l'autre compteur 71.

En cas de défauts sur un seul fil du bus 1, un des compteurs 71 ou 72 arrive à une valeur maximum (4 à titre d'exemple). L'impulsion de débordement déclenchera immédiatement par l'entrée 81 le circuit de commande 8 comportant des bascules 83 et 82 assurant le basculement en mode dégradé par un niveau 0. Le circuit 8 reçoit les sorties compteurs 71 et 72 soit la sortie de la bascule 753.

Chaque compteur 71 ou 72 est du type synchrone et fonctionne sur front descendant de l'horloge.

La sortie du compteur 71 (ou 72) est rétrocouplée par 714 (ou 724) et une porte ET 716 (ou 726), sur la remise à zéro de l'ensemble des bascules 711 à 713 (ou 721 à 723) ce qui permet de limiter le comptage à la valeur voulue (4) avec génération d'une impulsion qui est utilisée pour la commande de mémorisation du défaut.

La détection des défauts se fait à l'aide des compteurs 71 et 72, par analyse permanente de l'état de sorties de ces compteurs.

Il est possible de classifier les défauts en fonction de l'état des compteurs 71 et 72. On va mémoriser cet état, puis reconnaître la classification du défaut.

Lorsqu'un des compteurs 71 ou 72 arrive à une valeur maximale (4 par exemple), l'impulsion de débordement force à 1 la sortie d'une bascule de mémorisation 91 ou 92. Tant que le défaut est présent cette sortie reste à 1. La transition 0-1 à la sortie du circuit commande par 13 un circuit de remise à zéro 75 qui remet à

3

zéro les bascules, lors du passage mode dégradé en mode nominal, c'est-à-dire à la deuxième impulsion du circuit d'horloge 11 dit "watch dog", après disparition du défaut.

Pour des raisons d'intégration la remise à zéro des compteurs est réalisée, non pas avec un réseau résistance-conducteur (création d'un retard) mais avec le circuit de remise à zéro 73 ou 74 de la figure 5.

L'entrée du circuit de remise à zéro 73 ou 74 est attaquée par la sortie filtrée d'un comparateur 41 ou 42. Chaque front descendant provoque l'activation de la RAZ.

Ce circuit 73 ou 74 permet d'obtenir une impulsion de durée suffisante pour la RAZ car elle est définie par le temps de maintien nécessaire sur l'entrée "Effacement" de la bascule D 731 ou 741.

Le signal de sortie du comparateur 43 est injecté dans un compteur 75 représenté à la figure 4.

Ce compteur 75 est utilisé pour valider l'état normal et pour détecter les défauts non vus par les compteurs 71 et 72 (court circuit entre les deux fils ou bus sans communication).

Ce compteur de type synchrone est constitué par deux bascules D 751 et 752 et une bascule de mémorisation JK 753 recevant chacune sur l'entrée "Horloge" le signal de sortie du comparateur 43.

Le dernier étage constitue par la bascule JK 753 mémorise le passage d'un nombre prédéterminé de transitions du signal sortant du comparateur. A titre indicatif ce nombre prédéterminé est de 4. La réinitialisation du compteur ne se fait que périodiquement par un signal de supervision venant du circuit d'horloge dit "watch dog" et injecté par la RAZ sur les bascules.

Le signal dit "watch dog" est un train d'impulsions périodiques.

Pendant le déroulement du fonctionnement sans anomalie les stations doivent entrer en communication au moins une fois sur la période du signal dit "watch dog". Donc sur la période du signal dit "watch dog" on vérifie que la sortie du compteur 75 a bien commutée plusieurs fois. Le nombre minimal de commutations comptées par 75 pour un message sur le bus est au moins égal au nombre minimal de transitions d'une trame de message.

Le remplissage du compteur 75 déclenche la bascule de mémorisation JK 753 (niveau 1) sinon le niveau de sortie reste à O (état d'initialisation). Le signal de sortie de la bascule 753 est envoyé à un circuit de validation 82 (porte ET) recevant aussi le signal du circuit 11. L'impulsion de "watch dog" valide par le circuit de validation 82 le signal de sortie de la bascule JK 753 lorsqu'elle en est inversée. Un O sur la sortie 82 entraîne le mode normal, un 1 le mode dégradé.

L'impulsion de "watch dog" actionne également la remise à zéro du compteur 75 et réinitialise la sortie de la bascule 753 une fois la validation faite.

Ce circuit de commande 8 est constitué par une porte ET 81 qui reçoit la sortie des compteurs 71 et 72 et celle de la bascule 753.

Le circuit de réinitialisation 79 permettant d'obtenir le signal de RAZ pour le compteur 75 et de réinitialisation pour la bascule JK 753 à partir du "watch dog" est similaire à celui de la figure 5 mais sans inversion du signal d'entrée. Le signal de sortie est inversé pour créer la commande de validation. Une deuxième inversion permet d'obtenir le signal de réinitialisation retardé.

Les signaux de sortie des bascules de mémorisation 91 et 92 des compteurs 71 et 72 sont envoyés à un circuit de décodage de défaut 93. Ce circuit 93 est constitué de 4 circuits "NOR" 931 dont une entrée est reliée à la sortie Q d'une bascule 91 et dont l'autre entrée est reliée à l'autre sortie de l'autre bascule 91 ou 92.

L'état de sortie du couple des bascules 91 ou 92 est donc décodé par les 4 "NOR" du circuit 93. L'excitation d'une des sorties donne le type du défaut en cours :
- défaut sur le fil DATA+,
- défaut sur le fil DATA-,
- court-circuit ou bus inoccupé.

| Bascule 91 | Bascule 92 | DEFAUTS DECODES par les "NOR" |
|---|---|---|
| O | 1 | défaut sur le fil DATA + |
| 1 | O | défaut sur le fil DATA − |
| O | O | bus HS, bus inactif ou court circuit |
| O | O | état nominal |

L'état 1-1 des deux bascules 91 ou 92 indiquerait une succession de défauts alternativement sur les fils du bus - sans repasser par l'état normal. Ce cas est transformé en une succession d'états O-1, 1-O (ou inversement) par remise à zéro d'une bascule D 91 ou 92 opposée au compteur en débordement.

Les quatre "NOR" 931 du circuit de décodage 93 décodent l'état de sortie des bascules de mémorisation (91 ou 92). Comme l'état normal et le court-circuit sont représentés par le même couple de "bits" O-O, la sortie des "NOR" doit être validée par la commande "mode dégradé" (fait simplement par des portes ET 932). Un court-circuit détecté active la sortie 95 allant au gestionnaire de protocole 2.

En commande automatique, la sortie de chaque porte ET 14 va à une entrée d'une porte "ET" 131 dont l'autre entrée reçoit le signal d'un comparateur 41, 42 ou de manière à valider ou non la sortie de cette porte 131. Le circuit 13 de sélection recevant les signaux des portes ET 14 et des comparateurs permet de communiquer sur un seul fil soit sur 11, soit sur 12 en fonction du défaut décelé.

L'information "mode normal" issue de 15 inhibe les renseignements issus des "NOR" 931, et valide l'accès à un autre "ET" 131 excité par le comparateur 43. Les communications peuvent ainsi se faire normalement sur 11 et 12.

Un seul des 3 signaux arrivant sur les ET 131 et 132 peut être à 1 à un instant donné, donc une seule sortie de comparateur est validée. Un "OU" 133 permet de ne sortie que sur un fil.

Le choix entre le fonctionnement manuel ou le fonctionnement automatique se fait par un circuit 12 à l'aide de 2 fils 122 et 123 sur chacun desquels est appliqué un niveau logique :
- 1-1 : automatique,
- 0-0 : manuel avec sortie RO du comparateur 43,
- 0-1 : manuel avec sortie ERR1 du comparateur 41,
- 1-0 : manuel avec sortie ERR2 du comparateur 42.

La combinaison de sortie de ces fils est décodée par un ensemble 12 composé de 4 "ET" 121. Selon le couple de niveaux logiques, une seule sortie est au niveau 1, elle valide l'état voulu (manuel ou automatique). En manuel on force l'entrée inhibition des sorties des comparateurs. En automatique le contrôle est effectué selon l'analyse du montage.

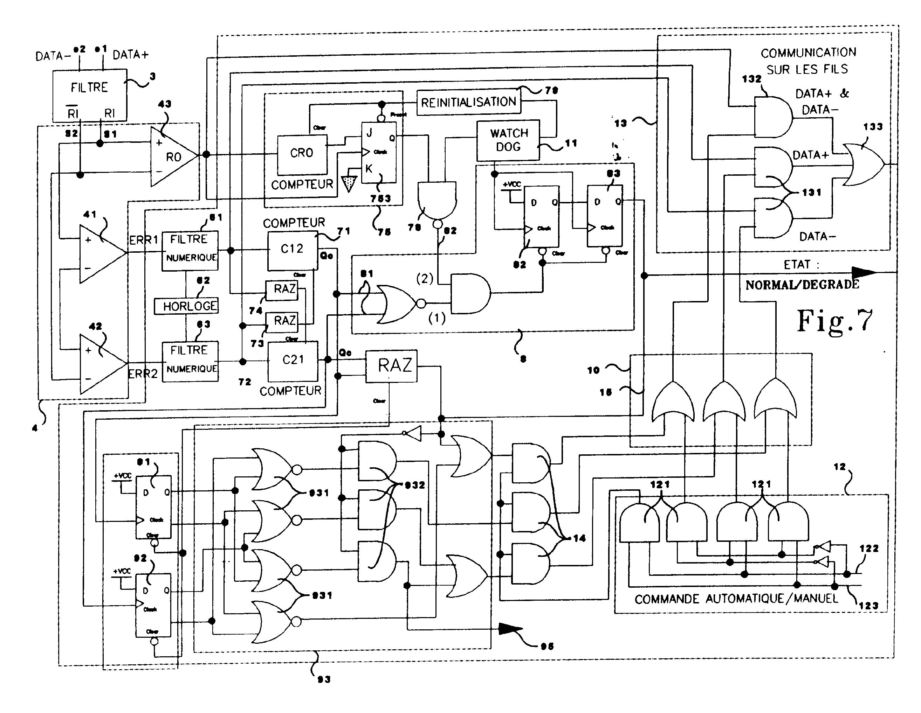

La figure 7 donne la réalisation de l'interface sur un macrocomposant à 32 bascules.

Ni le filtre analogique, ni les comparateurs ne sont intégrés.

Un des critères du choix du macrocomposant est son faible encombrement. Cependant son utilisation n'est pas indispensable. Dans ce dernier cas le système pourrait être amélioré par augmentation de la vitesse d'échantillonnage dans les filtres numériques et analysé sur un plus grand nombre d'échantillons avec prise de décision des commutations en fonction d'un certain pourcentage de 1 et O.

**Revendications**

1. Interface de ligne pour un réseau de transmission d'informations, notamment dans un véhicule automobile, comportant un filtre (3) recevant en entrée les signaux du bus (1) bifilaire et fournissant un signal filtre à un circuit de mise en forme (4) comportant trois comparateurs (41, 42, 43) dont le premier (43) reçoit les signaux filtrés, dont le second reçoit (41) le signal filtré d'un fil et une tension de référence, dont le troisième (42) reçoit le signal filtré de l'autre fil et une tension de référence, caractérisée par le fait qu'elle comporte des compteurs (71, 72) sur lesquels sont appliqués les signaux de sorties des deuxième et troisième comparateurs (41, 42), chacun de ces compteurs étant remis à zéro par le signal d'entrée de l'autre compteur de manière à détecter sur une sortie un nombre de transitions excédant un nombre prédéterminé alors que l'autre sortie n'en décompte pas et qu'il comporte un compteur (75) sur lequel est appliqué le signal du premier comparateur (43) pour décompter un nombre de transitions prédéterminé dudit signal pendant une période de temps et fournir un signal de défaut si le nombre est inférieur à ce nombre prédéterminé et des circuits électroniques (91, 92, 93, 8, 10) pour déclencher un changement d'état du signal de mode destiné au gestionnaire de protocole, si un signal de défaut est détecté.

2. Interface de ligne selon la revendication 1, caractérisée par le fait que les compteurs (71, 72, 75) sont de type synchrone.

3. Interface de ligne selon l'une quelconque des revendications précédentes, caractérisée par le fait qu'elle comporte un filtre numérique (61 et 62) en sortie de chacun des second et troisième comparateurs (41 et 42), ce filtre numérique fournissant un signal filtré aux compteurs (71,72).

4. Interface de ligne selon l'une quelconque des revendications précédentes caractérisée par le fait que les signaux des compteurs (71, 72) associés aux second et troisième comparateurs (41,42) sont envoyés à des bascules de mémorisation (91, 92).

5. Interface de ligne selon la revendication 4, caractérisée par le fait que les signaux de sortie des bascules de mémorisation (91, 92) sont envoyées à un circuit de reconnaissance de défaut (93) comportant des circuits "NOR" (931).

6. Interface selon l'une quelconque des revendications précédentes, caractérisée par le fait que chaque filtre numérique (61, 62) est constitué de bascules (611 à 616), d'une porte ET et d'une porte NOR commandant les entrées de la dernière bascule.

7. Interface selon l'une quelconque des revendications précédentes, caractérisée par le fait que le compteur (75) associé au premier comparateur (43) comporte une bascule (753) mémorisant le passage d'un nombre prédéterminé de transisition du signal sortant du comparateur, la réinitialisation étant faite périodiquement par un signal venant d'un circuit d'horloge (11).

8. Interface selon l'une quelconque des revendications précédentes, caractérisé par le fait qu'il comporte un circuit de sélection (13) recevant les signaux du circuit de décodage de défaut (93) et les signaux des comparateurs.

**Patentansprüche**

1. Leitungsschnittstelle für ein Nachrichtenübertragungsnetz, insbesondere in einem Kraftfahrzeug, mit einem Filter (3), dessen Eingang Signale einer Zweifach-Busleitung (1) zugeführt werden und der ein gefiltertes Signal einer Transformationsschaltung (4) zuführt, welche drei Vergleicher (41, 42, 43) aufweist, wobei der erste (43) die gefilterten Signale erhält, der zweite (41) das gefilterte Signal der einen Leitung sowie eine Referenzspannung erhält und der dritte (42) das gefilterte Signal der anderen Leitung sowie eine Referenzspannung erhält, dadurch gekennzeichnet, daß sie Zähler (71, 72) aufweist, denen die Ausgangssignale des zweiten und dritten Vergleichers (41, 42) zugeführt werden, wobei jeder Zähler auf Null gestellt wird durch das Eingangssignal des anderen Zählers, um so an einem Ausgang eine Anzahl von Übergängen zu messen, welche eine vorgegebene Anzahl übersteigt, während der andere Ausgang diese nicht zählt und daß sie einen Zähler (75) aufweist, dem das Signal des ersten Vergleichers (43) zugeführt wird, zur Zählung einer vorgegebenen Anzahl von Übergängen dieses Signals während eines Zeitraums und zur Abgabe eines Fehlersignals, wenn diese Anzahl kleiner ist als die vorgegebene Anzahl und daß sie elektronische Schaltkreise (91, 92, 93, 8, 10) aufweist, um eine Zustandsänderung des Modussignals auszulösen, das der Protokoll-Steuerschaltung zugeführt wird, wenn ein Fehlersignal festgestellt wird.

2. Leitungsschnittstelle nach Anspruch 1, dadurch gekennzeichnet, daß die Zähler (71, 72, 75) Synchronzähler sind.

3. Leitungsschnittstelle nach einem der vorhergehenden Ansprüche, dadurch gekennzeichnet, daß sie ein numerisches Filter (61 und 62) am Ausgang des zweiten und dritten Vergleichers (41 und 42) aufweist, wobei dieses numerische Filter den Zählern (71, 72) ein gefiltertes Signal zuführt.

4. Leitungsschnittstelle nach einem der vorhergehenden Ansprüche, dadurch gekennzeichnet, daß die Signale der Zähler (71, 72), die den zweiten und dritten Vergleichern (41, 42) zugeordnet sind, Speicher-Kippschaltungen (91, 92) zugeführt werden.

5. Leitungsschnittstelle nach Anspruch 4, dadurch gekennzeichnet, daß die Ausgangssignale der Speicher-Kippschaltungen (91, 92) einer Fehler-Erkennungs-Schaltung (93) zugeführt werden, die eine NOR-Schaltung (931) enthält.

6. Schnittstelle nach einem der vorhergehenden Ansprüche, dadurch gekennzeichnet, daß jedes numerische Filter (61, 62) aus Kippschaltungen (611, 616), einer UND-Schaltung und einer NOR-Schaltung besteht zur Ansteuerung der Eingänge der letzten Kippschaltung.

7. Schnittstelle nach einem der vorhergehenden Ansprüche, dadurch gekennzeichnet, daß der dem ersten Vergleicher (43) zugeordnete Zähler (75) eine Kippschaltung (753) aufweist, welche den Durchlauf einer vorgegebenen Anzahl von Übergängen des Ausgangssignals des Vergleichers speichert, wobei ein erneuter Beginn periodisch durch ein von einer Uhrschaltung (11) abgegebenes Signal ausgelöst wird.

8. Schnittstelle nach einem der vorhergehenden Ansprüche, dadurch gekennzeichnet, daß sie eine Auswahlschaltung (13) aufweist, die die Signale der Fehler-Erkennungs-Schaltung (93) erhält sowie die Signale der Vergleicher.

## Claims

1. A line interface for an information transmission network, in particular in an automobile vehicle, comprising a filter (3) receiving as input the signals from the two-wire bus (1) and supplying a filtered signal to a shaping circuit (4) comprising three comparators (41, 42, 43), the first of which (43) receives the filtered signals, the second of which (41) receives the filtered signal from a wire and a reference voltage and the third of which (42) receives the filtered signal from the other wire and a reference voltage, characterised in that it comprises counters (71, 72) to which the output signals from the second and third comparators (41, 42) are supplied, each of these counters being zero set by the input signal from the other counter so as to detect, at an output, a number of transitions exceeding a predetermined number, while the other output does not count them and in that it comprises a counter (75) to which the signal from the first comparator (43) is supplied in order to count a predetermined number of transitions of the signal during a period of time and to supply a defect signal if the number is lower than this predetermined number and electronic circuits (91, 92, 93, 8, 10) for triggering a change of state of the mode signal intended for the protocol manager, if a defect signal is detected.

2. A line interface as claimed in claim 1, characterised in that the counters (71, 72, 75) are of synchronous type.

3. A line interface as claimed in any one of the preceding claims, characterised in that it comprises a digital filter (61 and 62) at the output of each of the second and third comparators (41 and 42), this digital filter supplying a filtered signal to the counters (71, 72).

4. A line interface as claimed in any one of the preceding claims, characterised in that the signals from the counters (71, 72) associated with the second and third comparators (41, 42) are supplied to memory flip-flops (91, 92).

5. A line interface as claimed in claim 4, characterised in that the output signals from the memory flip-flops (91, 92) are supplied to a defect recognition circuit (93) comprising NOR circuits (931).

6. A line interface as claimed in any one of the preceding claims, characterised in that each digital filter (61, 62) is formed by flip-flops (611 to 616), an AND-gate and a NOR-gate controlling the inputs of the final flip-flop.

7. A line interface as claimed in any one of the preceding claims, characterised in that the counter (75) associated with the first comparator (43) comprises a flip-flop (753) memorising the passage of a predetermined number of transitions of the signal from the comparator, re-initialisation being carried out periodically by a signal from a clock circuit (11).

8. A line interface as claimed in any one of the preceding claims, characterised in that it comprises a selection circuit (13) receiving the signals from the defect decoding circuit (93) and the signals from the comparators.

Fig.1

Fig.2

# Fig.3

71(72)

711(721)

712(722)

713(723)

714(724)

SORTIE

Sortie du filtre

715(725)

RAZ

716(726)

# Fig.4

75

751

752

753

SORTIE

Sortie du comparateur 43

RAZ

# Fig.5

74(73)

741(731)

RAZ

ENTREE

Fig.6

INIT. : réinitialisation

Fig.8

Fig.7